# EUROPÄISCHE PATENTANMELDUNG

(11) **EP 3 825 796 A1**
(43) Veröffentlichungstag der Anmeldung: **26.05.2021**
(21) Anmeldenummer: 19210881.9
(22) Anmeldetag: 22.11.2019
(51) Int. Cl.: G05B 19/418

(54) **VERFAHREN UND VORRICHTUNG ZUM KI-BASIERTEN BETREIBEN EINES AUTOMATISIERUNGSSYSTEMS**

(71) Anmelder: Siemens Aktiengesellschaft, 80333 München (DE)
(72) Erfinder: Büttner, Florian, 81541 München (DE); Gross, Ralf, 90471 Nürnberg (DE); Limmer, Steffen, 80687 München (DE); Thon, Ingo, 85630 Grasbrunn (DE)

(57) **Zusammenfassung**

Die Erfindung betrifft eine Steuereinrichtung eines Automatisierungssystems, welche eingerichtet ist, um u.a. unter Nutzung eines KI-Systems eine Anlage, bspw. eine Produktionsanlage zu steuern. In einer Anwendung der Steuereinrichtung überwacht diese die Produktion hinsichtlich der Qualität der produzierten Objekte, bpsw. bezüglich des Vorliegens von Fehlerfällen. Das KI-System wird im Vorfeld basierend auf einer Vielzahl von bekannten Zuständen der Objekte trainiert, so dass das KI-System in der Lage ist, beim Auftreten von neuen, bislang nicht bekannten Zuständen trainiert zu werden, wobei lediglich eine geringe Zahl von Fallbeispielen benötigt wird.

## Beschreibung

Die Erfindung betrifft ein Automatisierungssystem und insbesondere dessen Steuereinrichtung zur Steuerung einer Anlage, bspw. einer Produktionsanlage.

Steuereinrichtungen moderner Automatisierungssysteme, bspw. zum automatischen Herstellen von Produkten A, B, C, setzen zur Steuerung bspw. eines zu automatisierenden Prozesses bereits künstliche Intelligenz (KI) ein, d.h. in den jeweiligen Steuereinrichtungen sind KI-Systeme implementiert. Diese können bspw. verwendet werden, um im Rahmen eines automatisierten Produktionsprozesses die Qualität der produzierten Produkte zu erfassen, bspw. hinsichtlich eventueller Beschädigungen des Produktes oder fehlerhafter Montage etc. Es hat sich gezeigt, dass trainierte KI-Systeme diesen Zweck äußerst zuverlässig erfüllen, solange die zu detektierenden Fehler in das vorgelagerte Training des KI-Systems eingegangen sind. Ein derartiges Training beruht bekanntermaßen auf einem extrem umfangreichen Datensatz, welcher bspw. aus Bildern der zu produzierenden Produkte A, B, C in jeglichen Zuständen Z besteht, wobei die Zustände Z bspw. die intakten Zustände Z0 der Produkte A, B, C sowie fehlerhafte Zustände Z1, Z2, Z3 der Produkte A, B, C umfassen. Für den Fall jedoch, dass im Produktionsprozess ein im Training nicht berücksichtigter Fehler FX auftritt, ist das trainierte KI-System nicht in der Lage, diesen unbekannten Fehlerzustand ZX zuverlässig zu identifizieren. Konsequenterweise ist ein weiteres Training des KI-Systems notwendig, um dieses in die Lage zu versetzen, den neuen Fehler FX zuverlässig zu erkennen. Bekanntermaßen werden hierfür jedoch zahlreiche verschiedene Datensätze des Produkts mit dem neuen Fehler FX benötigt. Da zum Einen moderne Produktionsanlage jedoch sehr geringe Fehlerraten aufweisen und dementsprechend nur einige wenige Fehler auftreten, würde es entsprechend lange dauern, bis die bislang benötigten Daten zum weiteren Training des KI-Systems verfügbar sind. Zum Anderen zeigt es sich, dass automatisierte Produktionsanlagen immer häufiger eingesetzt werden, um bestimmte Produkte imt vergleichsweise geringen Stückzahlen zu produzieren, so dass die für ein herkömmliches Training eines KI-Systems benötigten Datenmengen ggf. gar nicht anfallen können.

Es ist daher eine Aufgabe der vorliegenden Erfindung, vor dem geschilderten Hintergrund eine verbesserte Steuereinrichtung eines Automatisierungssystems bereitzustellen.

Diese Aufgabe wird durch den in Anspruch 1 beschriebenen Verfahren sowie durch die Vorrichtung gemäß Anspruch 11 und das Automatisierungssystem gemäß Anspruch 12 sowie dessen Betriebsverfahren gelöst. Die Unteransprüche beschreiben vorteilhafte Ausgestaltungen.

Ein computerimplementiertes Verfahren zur Lösung dieser Aufgabe beschreibt ein Trainieren eines von Parametern Phi bestimmten künstlichen neuronalen Netzwerkes KNN eines KI-Systems für eine Steuereinrichtung eines Automatisierungssystems. In einem ersten Schritt S1 des Trainings werden zum Parameter Phi(0) vorgegeben. In einem zweiten Schritt S2 werden dann neue Parameter Phi(p) des künstlichen neuronalen Netzwerkes mit p=1,2,... jeweils basierend auf Parametern Phi(p-1) ermittelt, im ersten Umlauf also basierend auf Phi(0). Dabei umfasst der zweite, seinerseits typischerweise mehrfache Wiederholungen umfassende Schritt S2 einen Selektionsverfahrensschritt S21(p) sowie einen Trainingsverfahrensschritt S22(p), wobei p für jede Wiederholung um 1 erhöht wird.

Für jedes p werden beginnend bei p=1 und endend bei p=Pmax im Selektionsverfahrensschritt S21(p) zur Bildung eines Minibatches klassifizierte Datensätze aus einer vorab bereitgestellten Datenbank selektiert, wobei der Minibatch schließlich die selektierten Datensätze umfasst. Im jeweiligen anschließenden Trainingsverfahrensschritt S22(p) wird das künstliche neuronale Netzwerk KNN anhand der selektierten klassifizierten Datensätze und ausgehend von Parametern Phi(p-1) trainiert, wobei in dem Traningsverfahrensschritt S22(p) jeweils neue das künstliche neuronale Netzwerk bestimmende Parameter Phi(p) ermittelt werden. Die vorab bereitgestellte Datenbank umfasst eine Vielzahl ND von klassifizierten Datensätzen zu einer Vielzahl von Objekten i mit i=A,B,C derart, dass für jedes der Objekte i jeweils eine Anzahl Ni von klassifizierten und dem jeweiligen Objekt i zugeordneten bzw. das jeweilige Objekt repräsentierenden Datensätzen verfügbar ist. Dabei repräsentiert bspw. ein Datensatz DSi(j) eines der Objekte i in einem bekannten Zustand j. Im Selektionsverfahrensschritt S21(p) wird nun zur Bildung des Minibatches MB(p) eine erste Gruppe G1 von Datensätzen und eine zweite Gruppe G2 von Datensätzen mit jeweils zumindest einem Datensatz selektiert.

Die Forderung, dass die Datensätze "klassifiziert" sind, meint hier, dass zumindest angegeben ist, um welches Objekt es sich handelt und in welchem Zustand es sich befindet. Als "Zustände" kommen grundsätzlich jegliche das Objekt kennzeichnende Informationen in Frage, welche für die anvisierte Anwendung des KNN relevant sein können. Bspw. für eine Anwendung zur Qualitätskontrolle können Zustände wie "intakt", "fehlerhaft mit Fehler F1", "fehlerhaft mit Fehler F2" etc. vorgesehen sein. Als Zustand kann jedoch auch bspw. eine Farbe oder eine Oberflächenbeschaffenheit etc. des Objekts verwendet werden.

Dabei soll zum Einen gelten, dass die Datensätze innerhalb einer jeweiligen Gruppe G1(p) bzw. G2(p) des Minibatches MB(p) bezüglich des Objekts i, das sie repräsentieren, und bezüglich des Zustands Zj dieses Objekts i gleichartig sind. D.h. für sämtliche Datensätze einer jeweiligen Gruppe G1 bzw. G2 gilt, dass sie dem gleichen Objekt zugeordnet sind bzw. das gleiche Objekt repräsentieren und dass sich das Objekt oder ggf. die gleichartigen Objekte, die durch diese Datensätze repräsentiert sind, im gleichen Zustand befinden. Hierbei kann -muss aber nicht- der Ausdruck "das gleiche Objekt" bzw. "der gleiche Zustand" etc. durchaus die Bedeutung von "das selbe Objekt" bzw. "der selbe Zustand" haben kann. Die Forderung, dass Datensätze bzgl. der Objekte, die sie repräsentieren, "gleichartig" sind, bedeutet also, dass diese gleichartigen Datensätze zumindest das gleiche, möglicherweise sogar das selbe Objekt repräsentieren. Wenn also bspw. bei einer Fertigungsanlage eine Vielzahl von gleichen Objekten bzw. in diesem Fall Produkten hergestellt und im Rahmen der Qualitätskontrolle mittels einer Kamera abgebildet wird, entsteht eine entsprechende Vielzahl von Datensätzen bzw. Bildern, welche bezüglich des Objekts gleichartig sind. Auch für den Fall, dass eines dieser Objekte mehrfach abgebildet wird, bspw. an verschiedenen Fertigungsstellen, so dass die entsprechenden Datensätze nicht nur das gleiche, sondern tatsächlich das selbe Objekt repräsentieren, werden diese Datensätze hier als bezüglich des Objekts "gleichartig" bezeichnet. Diese Erläuterung ist entsprechender Art und Weise auch für den Ausdruck "gleichartig bezüglich des Zustands" anzuwenden.

Zum Anderen soll gelten, dass die Datensätze verschiedener Gruppen G1(p), G2(p) des Minibatches MB(p) bezüglich des Objekts i, das sie jeweils repräsentieren, und/oder bezüglich des Zustands des jeweiligen Objekts i verschiedenartig sind. D.h. die Datensätze der ersten Gruppe G1 repräsentieren ein anderes Objekt als die Datensätze der zweiten Gruppe G2 und/oder der Zustand des durch die erste Gruppe G1 repräsentierten Objekts unterscheidet sich vom Zustand des durch die zweite Gruppe G2 repräsentierten Objekts.

Dieses Verfahren zum Trainieren des KI-Systems baut insbesondere auf der speziellen Auswahl der Minibatches auf. Hiervon wird eine große Zahl Pmax erstellt, wobei Pmax bspw. zwischen 100 und 1000 liegen kann. Dementsprechend wird auch eine große Anzahl von Trainingsverfahrensschritten ausgeführt, idealerweise mit jeweils unterschiedlichen Minibatches. Da die vorab bereitgestellte Datenbank typischerweise äußerst umfangreich ist und dementsprechend auf eine sehr große Datenmenge zurückgegriffen werden kann, hat das Training mit den Minibatches die Wirkung eines sog. "Meta-Lernens", so dass das KI-System aufgrund der Vielzahl Pmax von Wiederholungen bzw. Durchläufen des zweiten Schritts bzw. des Trainingsverfahrensschritts S22(p) quasi lernt zu lernen. Dies resultiert darin, dass es bei einem weiteren Training ausreicht, wenn, wie einleitend erläutert, nur wenige Fälle als Trainingsmaterial bereit gestellt werden können.

Vorteilhafterweise sind die Datensätze der ersten Gruppe G1(p) und die Datensätze der zweiten Gruppe G2(p) bezüglich des jeweiligen Objekts i, das sie repräsentieren bzw. dem sie zugeordnet sind, gleichartig. D.h. die Datensätze der beiden Gruppen repräsentieren das gleiche Objekt. Konsequenterweise müssen sich die Datensätze der ersten Gruppe von denen der zweiten Gruppe hinsichtlich des Zustands dieses Objekts unterscheiden, d.h. die Datensätze der ersten Gruppe repräsentieren das Objekt in einem ersten Zustand, bspw. als intaktes Objekt, und die Datensätze der zweiten Gruppe repräsentieren das gleiche oder ggf. das selbe Objekt in einem zweiten Zustand, bspw. als fehlerhaftes Objekt mit einem bestimmten Fehler bzw. einer bestimmten Beschädigung o.ä.. Dies resultiert in einem effizienten Lernprozess des KI-Systems.

Alternativ ist es durchaus denkbar, dass die Datensätze der ersten Gruppe und die Datensätze der zweiten Gruppe bezüglich des jeweiligen Objekts Oi, dem sie jeweils zugeordnet sind, verschiedenartig sind. D.h. die Datensätze der beiden Gruppen repräsentieren verschiedene Objekte. Konsequenterweise spielt es dann keine Rolle, ob sich die Datensätze der ersten Gruppe von denen der zweiten Gruppe bezüglich der Zustände der Objekte unterscheiden oder nicht.

Ein jeweiliger Minibatch MB(p) umfasst höchstens 50 Datensätze, insbesondere höchstens 20 Datensätze und vorzugsweise höchstens 10 Datensätze. Zwar wäre es denkbar, dass die Minibatches aufgrund der umfangreichen Datenbank noch größer ausgelegt werden, jedoch ist es bei kleineren Minibatches in der Konsequenz möglich, dass das KI-System in gegebener Zeit mehr Lernprozesse mit unterschiedlichen Szenarien durchlaufen kann. Auch hiermit ist ein effizienteres Lernen möglich. Größere Minibatches würden diese Zahl und damit die Effizienz des Lernprozesses verringern.

Eine Vorrichtung zum Betreiben eines Automatisierungssystems, welche insbesondere als Steuereinrichtung der Automatisierungssystems ausgebildet sein kann, weist bspw. im Auslieferungszustand bzw. bei Inbetriebnahme eines solchen Automatisierungssystems ein KI-System mit einem künstlichen neuronalen Netzwerk KNN zum Erzeugen von Steuerparametern für das Automatisierungssystem auf, wobei das künstliche neuronale Netzwerk KNN nach dem oben erläuterten Verfahren trainiert und dementsprechend durch Parameter Phi(Pmax) bestimmt ist.

Das somit trainierte künstliche neuronale Netzwerk KNN ist zwar leistungsfähig und kann demnach bspw. im Auslieferungszustand des KI-Systems bzw. der Steuereinrichtung bzw. des Automatisierungssystems vorgesehen sein, jedoch quasi lediglich vortrainiert insofern, als dass bislang unbekannte Fehler FX bzw. Zustände ZX wie einleitend erläutert noch nicht zuverlässig identifiziert werden können. Ein langwieriges weiteres Training ist beim Auftreten des Fehlers FX bei bereits in Betrieb genommener Anlage wie ebenfalls einleitend erläutert nicht wünschenswert. Wenn nun jedoch der neue Fehler FX auftritt ist es aufgrund des beschriebenen, auch als "Pre-Training" zu bezeichnenden Trainings mit Hilfe der Minibatches möglich, das KI-System mit nur wenigen Fallbeispielen des neuen Fehlers FX weiter zu trainieren. Hierbei wird nach dem zweiten Schritt S2, d.h. bei p=Pmax, in einem weiteren Trainingsschritt S3 ausgehend von den bis dahin ermittelten Parametern Phi(Pmax) und anhand eines weiteren Minibatches MB* weiter trainiert wird, um neue das künstliche neuronale Netzwerk bestimmende Parameter Phi(Pfin) zu ermitteln. Dabei wird der weitere Minibatch MB* derart erstellt, dass er neue, d.h. insbesondere in der vorab bereitgestellten Datenbank nicht vorhandene, klassifizierte Datensätze aufweist. Ein Datensatz gilt hierbei als "neuer" Datensatz, wenn er sich von den bislang in der Datenbank enthaltenen ursprünglichen Datensätzen DSi(j) bspw. mit i=A,B,C und j=Z0, Z1, Z2, Z3, bezüglich des Objekts i, das er repräsentiert, oder bezüglich des Zustands Z des Objekts i, das er repräsentiert, unterscheidet. Ein neuer Datensatz betrifft also ein Objekt oder einen Zustand, das bzw. der bisher, d.h. insbesondere beim Pre-Training, nicht bekannt war. Für die beschriebene Problematik des Auftretens eines neuen Fehlers FX bzw. Objektzustands ZX gilt insbesondere, dass sich die "neuen" Datensätze von den ursprünglichen Datensätzen bezüglich des Zustands unterscheiden, nicht aber bezüglich der Objekte. Das weitere Training mit dem so erstellen weiteren Minibatch MB* resultiert also in einem mit Hilfe weniger Fallbeispiele weiter trainierten KI-System, das in der Lage ist, den neuen Fehler FX zuverlässig zu erkennen. Der weitere Trainingsschritt S3 wird konsequenterweise erst ausgeführt, wenn festgestellt wird, dass sich eines der Objekte i in einem in der vorab bereitgestellten Datenbank bis dahin nicht bekannten Zustand ZX befindet, der also von keinem der Datensätze DSi(j) in der vorab bereitgestellten Datenbank repräsentiert ist. Dem weiteren Trainingsschritt geht dabei ein Klassifizieren der neuen Datensätze bezüglich des von ihnen repräsentierten Objekts und des Zustands dieses Objekts voraus.

Der weitere Minibatch MB* wird derart aufgebaut, dass er eine weitere erste Gruppe G1* von klassifizierten Datensätzen insbesondere aus der vorab bereitgestellten Datenbank und eine weitere zweite Gruppe G2* von klassifizierten Datensätzen umfassend die neuen Datensätze aufweist. Dabei sind die Datensätze der beiden weiteren Gruppen G1*, G2* bezüglich des Objekts, dem sie zugeordnet sind, gleichartig und bezüglich der Zustände dieses Objekts verschiedenartig. D.h. die Datensätze der weiteren ersten Gruppe G1* repräsentieren das Objekt in einem ersten Zustand und die Datensätze der weiteren zweiten Gruppe G2* repräsentieren das gleiche Objekt in einem zweiten, anderen Zustand. Auch hier weist jede der Gruppen G1*, G2* jeweils mindestens einen Datensatz auf. Hiermit ist wiederum ein effizientes Training möglich.

Die weitere zweite Gruppe G2* umfasst höchstens 10, insbesondere höchstens 5 und vorzugsweise höchstens 3 Datensätze. Somit ist ein schnelles weiteres Training des KI-Systems hinsichtlich des neuen Fehlers FX möglich.

Die neuen klassifizierten Datensätze werden schließlich in die Datenbank übertragen, um so eine aktualisierte vorab bereitzustellende Datenbank zu generieren. Damit können die Steuereinrichtung und das KI-System in der Folge derart regulär betrieben werden, dass der dann nicht mehr neue Fehler FX so wie die ursprünglich bekannten Fehler F1, F2, F3 erkannt werden kann.

Die bereits erwähnte Vorrichtung kann gegenüber dem exemplarisch genannten Auslieferungszustand derart weiter ausgebildet sein, dass das KI-System weiter trainiert ist und das künstliche neuronale Netzwerk KNN demnach durch Parameter Phi(Pfin) bestimmt ist. Damit ist dann auch der neue Fehler FX identifizierbar.

Ein Automatisierungssystem weist mit den genannten Vorteilen konsequenterweise eine derartige als Steuereinrichtung des Automatisierungssystems ausgebildete Vorrichtung auf.

Beim Betrieb eines solchen Automatisierungssystems wird das vortrainierte, d.h. mit Parametern Phi(Pmax) arbeitende KI-System weiter trainiert, wenn festgestellt wird, dass sich eines der Objekte in einem in der vorab bereitgestellten Datenbank bis dahin nicht bekannten Zustand ZX befindet, der also von keinem der Datensätze DSi(j) in der vorab bereitgestellten Datenbank repräsentiert ist.

Weitere Vorteile und Ausführungsformen ergeben sich aus den Zeichnungen und der entsprechenden Beschreibung.

Im Folgenden werden die Erfindung und beispielhafte Ausführungsformen anhand von Zeichnungen näher erläutert. Dort werden gleiche oder funktionsgleiche Komponenten in verschiedenen Figuren durch gleiche Bezugszeichen gekennzeichnet. Es ist daher möglich, dass sich bei der Beschreibung einer zweiten Figur zu einem bestimmten Bezugszeichen, welches bereits im Zusammenhang mit einer anderen, ersten Figur erläutert wurde, keine näheren Erläuterungen finden. In einem solchen Fall kann bei der Ausführungsform der zweiten Figur davon ausgegangen werden, dass die dort mit diesem Bezugszeichen gekennzeichnete Komponente auch ohne nähere Erläuterung im Zusammenhang mit der zweiten Figur die gleichen Eigenschaften und Funktionalitäten aufweist, wie im Zusammenhang mit der ersten Figur erläutert.

Es zeigen:
- FIG 1: eine Produktionsanlage mit Automatisierungssystem,
- FIG 2: eine Datenbank,
- FIG 3: einen Prozess zum Trainieren eines KI-Systems,
- FIG 4: einen Minibatch,
- FIG 5: einen Prozess zum weiteren Trainieren des KI-Systems,
- FIG 6: einen weiteren Minibatch.

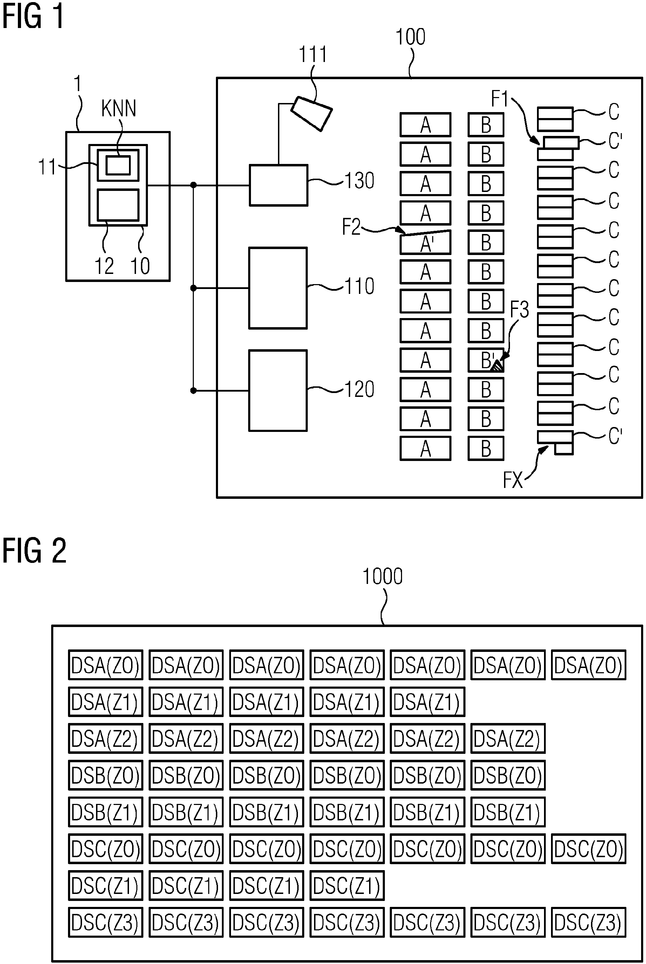

Die FIG 1 zeigt ein Automatisierungssystem 1, welches eine exemplarisch als Produktionsanlage ausgebildete Anlage 100 bzw. deren Maschinen 110, 120 mit Hilfe seiner Steuereinrichtung 10 steuert. Die Produktionsanlage 100 zum automatischen Herstellen zumindest eines Teiles eines Produktes A, B, C ist lediglich exemplarisch als eine von einem solchen Automatisierungssystem 1 steuerbare Anlage gewählt. Generell gilt, dass das Automatisierungssystem 1 bspw. zur Fabrik- oder auch zur Prozessautomatisierung eingesetzt werden kann und die diesem Einsatzgebiet entsprechende Anlage 100 mit Hilfe seiner Steuereinrichtung 10 steuert. Im Folgenden wird lediglich exemplarisch davon ausgegangen, dass es sich bei der zu steuernden Anlage 100 um eine Produktionsanlage handelt, welche verwendet wird, um verschiedene Objekte bzw. Produkte A, B, C zu erzeugen. Dabei stehen A, B bzw. C für Produkttypen bzw. Produktgruppen und nicht für ein jeweiliges einzelnes Produkt.

Einer der Produktionsschritte zur Erzeugung der Produkte A, B, C liegt im Rahmen einer Qualitätskontrolle in einer ebenfalls von der Steuereinrichtung 10 gesteuerten Überprüfung der Produkte A, B, C hinsichtlich des Vorliegens von Produktionsfehlern. Dabei wird mit Hilfe eines Qualitätskontrollsystems 130 der Produktionsanlage 100 idealerweise bereits während des Produktionsprozesses überprüft, ob die Produkte A, B, C fehlerhaft sind. Das Ziel dieser Überprüfung liegt darin, dass ein fehlerhaftes Produkt A', B', C' in der Qualitätskontrolle erkannt und anschließend dem Produktionsprozess entnommen werden kann, so dass eine Auslieferung eines fehlerhaften Produkts A', B', C' an einen Kunden oder generell der Einsatz eines solchen fehlerhaften Produkts A', B', C' frühzeitig vermieden werden kann.

Ein Produkt A, B, C, das einen Produktionsfehler F1, F2 etc. aufweist, wird hier konsequenterweise als "fehlerhaftes Produkt" bezeichnet und in FIG 1 mit A', B' bzw. C' gekennzeichnet. Je nachdem, welche Art von Fehlern in der Qualitätskontrolle detektiert werden soll, weist das Qualitätskontrollsystem 130 eine entsprechende Sensorik 131 auf. Im Folgenden wird wiederum rein exemplarisch angenommen, dass das Qualitätskontrollsystem 130 Beschädigungen oder andere insbesondere von außen erkennbare Fehler aufspüren soll. Derartige Fehler können bspw. für den Fall, dass das jeweilige Produkt A, B, C im Rahmen der Produktion aus mehreren Komponenten zusammengefügt wird, darin bestehen, dass diese Komponenten nicht wie vorgesehen kombiniert wurden, so dass das Vorliegen eines solchen Produktionsfehlers F1 schon optisch erkennbar ist. Dies ist exemplarisch am Beispiel des Produktes C' dargestellt. Auch mechanische Beschädigungen bspw. des Gehäuses eines Produktes A, B, C sind optisch erkennbar. Diese Fehler F2, F3 sind ebenfalls exemplarisch für die Produkte A', B' dargestellt. Die entsprechende Sensorik 131 des Qualitätskontrollsystems 130 ist zur Erkennung derartiger Fehler bspw. in Form einer oder mehrerer Kameras 131 ausgebildet. Die Kamera 131 ist derart angeordnet, dass sie das Produkt A, B, C an einer geeigneten Stelle des Produktionsprozesses in für die Qualitätskontrolle geeigneter Weise abbilden kann.

Es sei angemerkt, dass die oben eingeführten und in FIG 1 dargestellten Fehler bzw. Fehlerarten F1, F2, F3 rein exemplarisch zu verstehen sind und keine Einschränkung des hier verfolgten Ansatzes bedeuten.

Es sei weiterhin angemerkt, dass die Sensorik 131 alternativ zur Ausbildung als Kamera und wie bereits angemerkt in Abhängigkeit von der Art des zu detektierenden Fehlers auch in anderer Form ausgebildet ein kann. Bspw. könnte die Sensorik 131 ausgebildet sein, um akustische oder sonstige Effekte, bspw. auch Zeitserien von Produktionsdaten, zu detektieren bzw. zu erfassen, aus denen Rückschlüsse auf das Vorhandensein des zu detektierenden Fehlers gezogen werden können. In jedem Fall erzeugt die Sensorik 131 Datensätze DSA, DSB, DSC zu den Produkten A, B, C. Ein solcher Datensatz DSi mit i=A,B,C ist im genannten exemplarischen Fall, dass die Sensorik 131 als Kamera ausgebildet ist, welche Bilder der Produkte A, B, C erzeugt, ein solches von der Kamera 131 erzeugtes Bild.

Um nun in der Qualitätskontrolle mit Hilfe des Qualitätskontrollsystems 130 fehlerhafte Produkte A', B', C' zu erkennen, wird jedes einzelne von der Kamera 131 aufgenommene Bild DSi mit Hilfe eines KI-Systems 11 der Steuereinrichtung 10 der Automatisierungsanlage 1 in an sich bekannter Weise analysiert, wobei "KI" für "künstliche Intelligenz" steht. Hierzu werden die vom Qualitätskontrollsystem 130 ermittelten Datensätze DSi dem KI-System 11 bereitgestellt. Das KI-System 11 hat Zugriff auf eine Datenbank 12 und umfasst ein trainiertes künstliches neuronales Netzwerk KNN, welches in ebenfalls bekannter Weise von Parametern Phi bestimmt ist. Dies versetzt das KI-System 11 in die Lage, die bereits bekannten Fehler F1, F2, F3 in neuen Bildern bzw. Datensätzen DSi zu erkennen. Die Steuereinrichtung 10 generiert nun Steuerparameter für die Produktionsanlage 100, die u.a. von den Analysen bzw. Ausgangsdaten des KI-Systems 11 abhängen, bspw. betreffend die Qualität der Produkte A, B, C.

Kommt es jedoch zum eingangs geschilderten problematischen Fall, dass eines der Produkte, im Folgenden bspw. eines der Produkte C, einen bislang unbekannten Fehlertyp FX aufweist, so ist das KI-System 11 nicht in der Lage, diesen neuen Fehler als solchen zu erkennen, da zum Training dieses KI-Systems 11 dieser Fehler noch nicht bekannt war. Wie ebenfalls eingangs erläutert, ist es herkömmlicherweise notwendig, das KI-System 11 bzw. dessen neuronales Netzwerk KNN aufwändig und basierend auf einer Vielzahl von Fällen zu trainieren. In der FIG 1 besteht der Fehler FX darin, dass eine der beiden Komponenten, aus denen das Produkt C zusammengebaut ist, nicht wie beim Fehler F1 verschoben ist, sondern teilweise fehlt.

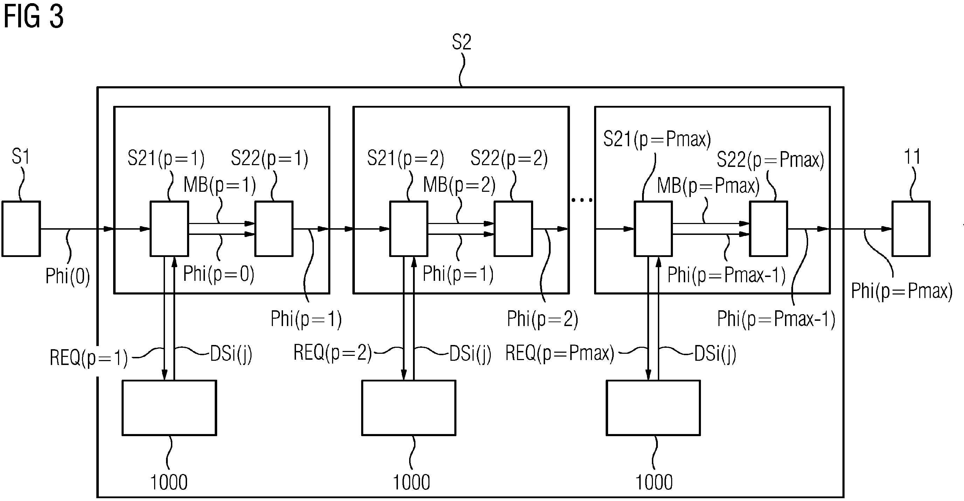

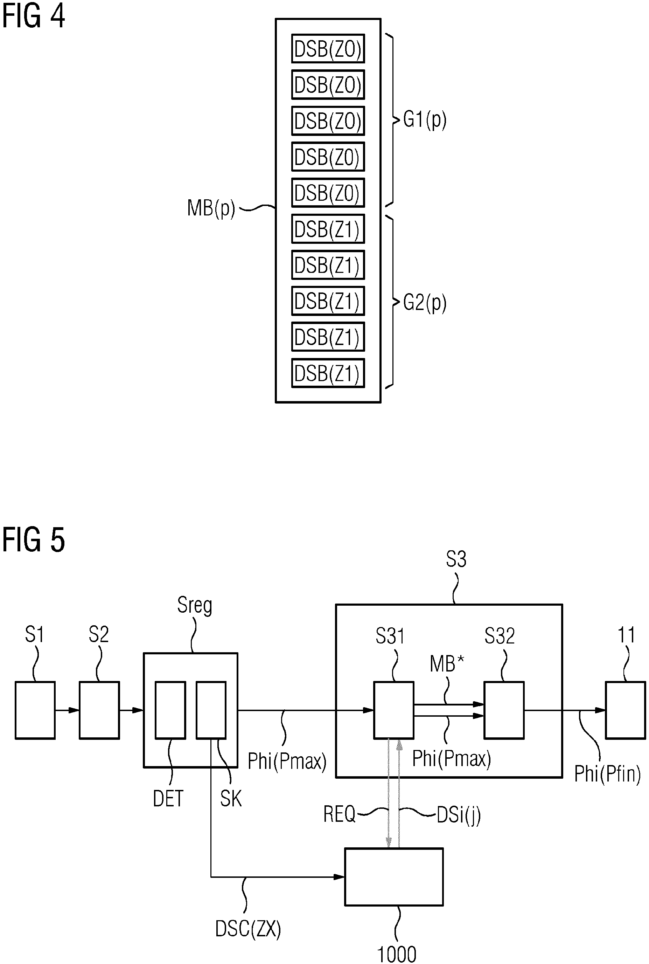

Es ist nun also das Ziel der Erfindung, das Automatisierungssystem 1 mit Hilfe eines entsprechend ausgebildeten KI-Systems 11 in die Lage zu versetzen, schnell, d.h. anhand au-ßergewöhnlich weniger Fälle, eine automatisierte Erkennung derartiger neuer Fehler zu ermöglichen. Hierzu muss das KI-System 11 bzw. dessen KNN basierend allein auf diesen wenigen Fällen bzw. basierend auf den entsprechend wenigen Bildern bzw. Datensätzen der fehlerhaften Produkte C' trainierbar sein. Das entsprechend anzuwendende Verfahren wird im Zusammenhang mit FIG 5 erläutert. Zuvor wird im Zusammenhang mit FIG 3 das Verfahren zum grundlegenden Training bzw. Pre-Training des KI-Systems 11 erläutert, was insbesondere in Form der speziellen Auswahl der im Folgenden einzuführenden "Minibatches" die Basis dafür liefert, dass das KI-System 11 anhand weniger Fälle lernt, diese in der Folge zu erkennen.

Diese Voraussetzung, dass das KI-System 11 basierend auf nur wenigen Datensätzen trainierbar ist, wird dadurch erfüllt, dass bspw. zumindest im Rahmen des grundlegenden Trainings des KI-Systems 11, d.h. im Rahmen des Trainings, welchem das KI-System 11 unterzogen wird, bevor es im Automatisierungssystem 1 bzw. in diesem Fall in der Steuereinrichtung 10 implementiert wird, ein geeignetes Pre-Training des KI-Systems 11 bzw. des künstlichen neuronalen Netzwerkes KNN ausgeführt wird.

Für das Pre-Training wird eine Datenbank 1000 verwendet, welche bereits eine Vielzahl von klassifizierten Datensätzen DSA, DSB, DSC bzgl. der Produkte A, B, C umfasst, welche bereits im Vorfeld generiert wurden. Die Datenbank 1000 ist in FIG 2 dargestellt und kann in der Praxis bspw. in der Steuereinrichtung 10 gespeichert sein (in der FIG 1 durch die Datenbank 12 repräsentiert). Dabei meint der Begriff "klassifiziert" für die hier anvisierte Anwendung zumindest, dass zu einem jeweiligen Datensatz DSi zum Einen hinterlegt ist, um welches der Produkte A, B, C es sich bei einem speziellen Datensatz DSi handelt bzw. welches der Produkte A, B bzw. C dieser Datensatz DS repräsentiert. Zum Anderen ist zu diesem Datensatz DSi desweiteren hinterlegt, in welchem Zustand Z sich das vom jeweiligen Datensatz DS repräsentierte Produkt A, B bzw. C jeweils befindet. Als "Zustände" Z kommen grundsätzlich jegliche das jeweilige Produkt A, B bzw. C kennzeichnenden Informationen in Frage, welche für die anvisierte Anwendung des KI-Systems 11 relevant sein können. Bspw. für die hier angenommene Anwendung zur Qualitätskontrolle können Zustände wie Z0="ok" bzw. Z0="intakt" und allgemein Zf="fehlerhaft" unterschieden werden. Für den Fall, dass entsprechende Daten vorliegen und dass diese für die Anwendung von Interesse sind, könnten bspw. auch Zustände Z0="ok", Z1="fehlerhaft mit Fehler F1", Z2="fehlerhaft mit Fehler F2", Z3="fehlerhaft mit Fehler F3" usw. vorgesehen sein, wobei die Fehler F1, F2 unterschiedlich sind und bspw. den oben eingeführten Beispielen entsprechen können. Als Zustand Z kann jedoch auch bspw. eine Farbe oder eine Oberflächenbeschaffenheit etc. der Produkte A, B, C verwendet werden.

Die bereitgestellte Datenbank 1000 umfasst für jedes der Produkte A, B, C jeweils eine Vielzahl von klassifizierten und dem jeweiligen Produkt A, B bzw. C zugeordneten bzw. das jeweilige Produkt A, B bzw. C repräsentierenden Datensätzen DSA, DSB, DSC, wobei die "Zuordnung" allein schon durch die Klassifizierung realisiert sein kann, da diese zumindest die Produktart und den jeweiligen Zustand Z umfasst. Insbesondere umfasst die Datenbank 1000 für jeden für die Anwendung relevanten Zustand Z jedes Produkts A, B bzw. C eine Vielzahl von klassifizierten Datensätzen DSA(Z(A)), DSB(Z(B)), DSC(Z(C)), wobei bspw. Z(A) den Zustand des Produktes A in diesem Datensatz DS(Z(A)) etc. bedeutet. Bspw. würde also DSA(Z0) Datensätze meinen, die das Produkt A im Zustand Z0, also "intakt", repräsentieren. DSC(Z1) steht für Datensätze, die das Produkt C im Zustand Z1 repräsentieren, d.h. bspw. "fehlerhaft mit Fehler F1" usw.

In der FIG 2 sind der Übersichtlichkeit wegen nur einige wenige Datensätze DSi(j) mit j=Z0, Z1, Z2, Z3... dargestellt. Es sollte klar sein, dass die Datenbank 1000 bzw. der Bereich 1100 in der Praxis eine wesentlich größere Anzahl von Datensätzen umfasst, nämlich zumindest so groß, dass hiermit das grundlegende Training des KI-Systems 11 möglich ist. Des weiteren ist erkennbar, dass die Anzahlen der jeweils verfügbaren Datensätze DSi(j) zu Produkten A, B, C in bestimmten Zuständen Z0, Z1, Z2, Z3 unterschiedlich sein kann.

Im Pre-Training des KI-Systems 11 werden nun die Parameter Phi des künstlichen neuronalen Netzwerkes KNN anhand der in der Datenbank 1000 vorhandenen klassifizierten Datensätze DSi(j) optimiert. Dieser Prozess ist in der FIG 3 dargestellt.

Hierbei werden in einem ersten Verfahrensschritt S1 zunächst Ausgangsparameter Phi(0) des künstlichen neuronalen Netzwerkes KNN zur Verfügung gestellt.

In einem zweiten Verfahrensschritt S2, welcher seinerseits zwei Schritte S21, S22 umfasst, werden die Parameter Phi in typischerweise mehreren Wiederholungen p mit p=1,2,...,Pmax bzw. Iterationen optimiert, wobei p in ganzzahligen, ansteigenden Schritten von 1 bis Pmax läuft.

In jeder der Wiederholungen p, angefangen bei p=1, wird im ersten Schritt bzw. in einem Selektionsverfahrensschritt S21(p) jeweils ein Minibatch MB(p) bestehend aus einer Vielzahl von klassifizierten Datensätzen DSi(j) aus der Datenbank erstellt, d.h. es werden jeweils klassifizierte Datensätze DSi(j) aus der vorab bereitgestellten Datenbank 1000 selektiert, wobei der Minibatch MB(p) dann die selektierten Datensätze DSi(j) umfasst. In der FIG 3 ist die entsprechende Anfrage bzw. Anforderung an die Datenbank 1000, aufgrund derer die angeforderten Datensätze DSi(j) bereitgestellt werden, mit "REQ" symbolisiert.

Im zweiten Schritt bzw. in einem Trainingsverfahrensschritt S22(p) der Wiederholung p werden die jeweils geltenden Parameter Phi(p-1) des künstlichen neuronalen Netzwerkes KNN unter Verwendung des jeweiligen Minibatches MB(p) in typischerweise mehreren Iterationen und bspw. unter Verwendung des an sich bekannten SGD-Verfahrens (stochastic gradient descent) optimiert, resultierend in für diesen Wiederholungsschritt p nun optimierten Parametern Phi(p). Das SGD-Verfahren kann bspw. mit 2 bis 5 Iterationen auskommen. Mit anderen Worten lernt also im jeweiligen Trainingsverfahrensschritt S22(p) das künstliche neuronale Netzwerk KNN anhand der im Selektionsverfahrensschritt S21(p) selektierten klassifizierten Datensätze DSi(j) und ausgehend von Parametern Phi(p-1), wobei in dem Trainingsverfahrensschritt S22(p) neue das künstliche neuronale Netzwerk bestimmende Parameter Phi(p) erzeugt werden.

Der zweite Verfahrensschritt S2 endet mit der Wiederholung p=Pmax, wobei zur Wahl von Pmax bspw. berücksichtigt werden kann, ob das Optimierungsverfahren konvergiert. Bspw. kann Pmax zwischen 100 und 1000 liegen. Mit dem Erreichen von p=Pmax liegen optimierte Parameter Phi(Pmax) für das künstlichen neuronale Netzwerk KNN vor, die letztlich dem KI-System 11 übergeben werden bzw. dort bereits vorliegen, weil die beschriebenen Verfahrensschritte S21, S22 dort ausgeführt wurden.

Im jeweiligen Selektionsverfahrensschritt S21(p) wird wie erwähnt jeweils ein Minibatch MB(p) aus den klassifizierten Datensätzen DSi(j) aus der Datenbank 1000 generiert. Dabei wird ein jeweiliger Minibatch MB(p) gezielt derart generiert und an den Schritt S22(p) übergeben, dass er zwei Gruppen G1(p), G2(p) von klassifizierten Datensätzen DSi(j) umfasst, wobei zur Auswahl der Datensätze DSi(j) für die Gruppen G1(p), G2(p) zwei Bedingungen erfüllt sein sollen:
Zum Einen soll gelten, dass sämtliche Datensätze DSG1(p) bzw. DSG2(p) innerhalb einer jeweiligen Gruppe G1(p) bzw. G2(p) des Minibatches MB(p) sowohl bezüglich des Produkts A, B bzw. C, dem sie zugeordnet sind, als auch bezüglich des Zustands Z dieses Produkts A, B bzw. C gleichartig sind. D.h. für sämtliche Datensätze DSG1(p) bzw. DSG2(p) einer jeweiligen Gruppe G1(p) bzw. G2(p) gilt, dass sie dem gleichen Produkt A, B bzw. C zugeordnet sind bzw. das gleiche Produkt A, B bzw. C repräsentieren und dass sich das Produkt A, B bzw. C, das durch diese Datensätze DSG1(p) bzw. DSG2(p) repräsentiert ist, im gleichen Zustand Z befindet. Hierbei kann -muss aber nicht- bspw. der Ausdruck "das gleiche Objekt" durchaus die Bedeutung von "das selbe Objekt" haben.

Zum Anderen sollen dagegen die Datensätze DSG1(p) und DSG2(p) verschiedener Gruppen G1(p) und G2(p) des Minibatches MB(p) bezüglich des Produktes A, B bzw. C, das sie jeweils repräsentieren, und/oder bezüglich des Zustands Z des jeweils repräsentierten Produktes A, B bzw. C verschiedenartig sein. D.h. die Datensätze DSG1(p) der ersten Gruppe G1(p) repräsentieren ein anderes Produkt als die Datensätze DSG2(p) der zweiten Gruppe G2(p) und/oder der Zustand Z des durch die erste Gruppe G1(p) repräsentierten Produktes unterscheidet sich vom Zustand Z des durch die zweite Gruppe G2(p) repräsentierten Produktes.

Rein exemplarisch und in der FIG 4 dargestellt können also die Datensätze DSG1(p) der ersten Gruppe G1(p) derart ausgewählt sein, dass sie alle das Produkt B in intaktem Zustand Z0 repräsentieren, d.h. DSG1(p)=DSB(Z0). Die Datensätze DSG2(p) der zweiten Gruppe G2(p) können bspw. ebenfalls derart gewählt sein, dass sie alle das Produkt B repräsentieren. Es muss dann jedoch desweiteren gelten, dass die Datensätze DSG2(p) das Produkt B in einem vom Zustand Z0 verschiedenen Zustand repräsentieren, bspw. im Zustand Z1 ("fehlerhaft mit Fehler F1"). Es gilt also DSG2(p)=DSB(Z1).

Alternativ können im Fall von DSG1(p)=DSB(Z0) die Datensätze DSG2(p) der zweiten Gruppe G2(p) bspw. auch derart gewählt sein, dass sie ein anderes Produkt repräsentieren als diejenigen der Gruppe G1(p), bspw. das Produkt A. In dem Fall können die Datensätze derart gewählt sein, dass sie das Produkt A in quasi beliebigem Zustand repräsentieren, bspw. Z=Z0. Es gälte demnach DSG2(p) =DSA(Z0).

Wenn also die Datensätze DSG1(p) der ersten Gruppe G1(p) mit DSG1(p)=DSi(j) beschrieben werden und für die Datensätze DSG2(p) der zweiten Gruppe G2(p) gilt DSG2(p)=DSm(n), muss bei der Erzeugung des Minibatches MB(p) gelten i#m und/oder j#n, wobei i,m=A,B,C das jeweilige Produkt A, B, C und j,n=Z0, Z1, Z2, Z3 den jeweiligen Zustand dieses Produkts A, B, C symbolisieren.

Wesentlich ist also, dass sich die Datensätze DSG1(p) der Gruppe G1(p) von denen DSG2(p) der Gruppe G2(p) zumindest bezüglich des repräsentierten Produkts oder bezüglich des Zustands unterschieden. Vorzugsweise gilt, dass sämtliche Datensätze des Minibatches MB(p), d.h. sowohl diejenigen der ersten Gruppe G1(p) als auch diejenigen der zweiten Gruppe G2(p), das gleiche Produkt A, B, bzw. C repräsentieren, d.h. DSG1(p)=DSi(j) und DSG2(p)=DSi(n) mit j#n. Dabei repräsentieren jedoch die Datensätze DSG1(p) der ersten Gruppe G1(p) dieses eine Produkt i in einem ersten Zustand j, bspw. Produkt B in intaktem Zustand Z0, während die Datensätze DSG2(p) der zweiten Gruppe G2(p) dieses eine Produkt B in einem anderen Zustand n repräsentieren, bspw. Produkt B in fehlerhaftem Zustand Z1 mit Fehler 1.

Hinsichtlich der Anzahl der Datensätze DSi(j) in den beiden Gruppen G1(p), G2(p) gilt, dass bspw. jeweils 3-5 Datensätze DSi(j) ausreichen können. Dabei können die Anzahlen der Datensätze DSi(j) in den Gruppen G1(p), G2(p) auch unterschiedlich sein.

Im Schritt S21(p) wird durch die konkrete Auswahl der Datensätze DSG1(p), DSG2(p) der Gruppen G1(p), G2(p) für den jeweiligen Minibatch MB(p) zum Einen grundsätzlich die Datenbasis für den Lernprozess des künstlichen neuronalen Netzwerkes KNN im Trainingsverfahrensschritt S22(p) festgelegt. Zum Anderen bedeutet die konkrete Auswahl der klassifizierten Datensätze DSG1(p), DSG2(p) der beiden Gruppen G1(p), G2(p) gleichzeitig die Festlegung der Aufgabenstellung oder auch "task generation" für den Lernschritt des KI-Systems 11, nämlich die Einordnung der Datensätze DSG1(p) der ersten Gruppe G1(p) bzw. die Einordnung der Datensätze DSG2(p) der zweiten Gruppe G2(p) gemäß ihrer jeweiligen Klassifizierung. Mit anderen Worten erfolgt in jedem Selektionsverfahrensschritt S21(p) also eine jeweilige Generierung eines Minibatches MB(p) sowie implizit eine Generierung einer Aufgabenstellung für den jeweiligen Trainingsverfahrensschritt S22(p), wobei diese Aufgabenstellung bspw. lauten kann, dass das KI-System 11 die Datensätze DSG1(p), DSG2(p) des jeweiligen Minibatches MB(p) gemäß dem jeweils repräsentierten Produkt und gemäß dessen Zustand einordnen soll.

Nach Abschluss des Pre-Trainings umfassend den ersten und den zweiten Verfahrensschritt S1, S2 ist das KI-System 11 soweit trainiert, dass es zum Einen die bekannten Zustände Z=Z0, Z1, Z2, Z3 der bekannten Produkte A, B, C identifizieren kann, so dass es bspw. für die Qualitätskontrolle einsetzbar ist. Dementsprechend wird das so trainierte KI-System 11 in der Steuereinrichtung 10 und dort ggf. in einer untergeordneten Komponente implementiert und eingesetzt, indem die von der Sensorik 131 gelieferten Daten mit Hilfe des KI-Systems 11 ausgewertet werden. Bei Erkennung eines Fehlerfalls durch das KI-System 11 kann dann die Steuereinrichtung 10 bspw. mit Hilfe eines entsprechenden Steuersignals für das Automatisierungssystem 1 bewirken, dass das erkannte fehlerhafte Produkt dem Produktionsprozess entnommen wird, oder andere geeignete Maßnahmen einleiten.

Wenn nun ein jedoch neuartiger Fehlerfall FX bzw. ein entsprechender Zustand ZX an einem Produkt auftritt, ist es aufgrund des beschriebenen Pre-Trainings mit den speziell gewählten Minibatches MB nun mit wenigen Fallbeispielen möglich, das KI-System 11 und dessen künstliches neuronales Netzwerk KNN dahingehend zu trainieren, dass der neuartige Fehler FX am betroffenen Produkt in der Folge zuverlässig erkannt wird. ZX kann hierbei bspw. "fehlerhaft mit Fehler FX" bedeuten. Im Folgenden wird rein exemplarisch davon ausgegangen, dass eines der Produkte C den neuen, bislang unbekannten Fehler FX aufweist. Dies ist bereits in der FIG 1 dargestellt.

Um den neuen Fehler FX erkennen zu können, wird das trainierte, an sich bereits funktionsfähige und in der Steuereinrichtung 10 implementierte KI-System 11, dessen künstliches neuronales Netzwerk KNN bislang noch durch die Parameter Phi(Pmax) bestimmt ist, welche jedoch eine Erkennung des neuen Fehlers FX typischerweise nicht erlauben, in einem weiteren, dritten Verfahrensschritt S3 dahingehend weiter trainiert, dass es letztlich durch neue Parameter Phi(Pfin) bestimmt ist. Das anzuwendende Verfahren wird im Zusammenhang mit FIG 5 erläutert.

Der dritte Verfahrensschritt S3 mit den Schritten S31 und S32 wird ausgelöst, sobald im normalen Betrieb Sreg der Anlage 100 im Schritt DET festgestellt wurde, dass ein neuer Fehler FX vorliegt, bspw. an einem der Produkte C. Das kann bspw. dadurch signalisiert sein, dass das KI-System 11 in einem gerade aufgenommenen Bild DSi nicht erkennt, in welchem Zustand sich das dort abgebildete Produkt i befindet. In der Folge werden die betroffenen Datensätze DSC(ZX) in einem Schritt SK dem Fehler FX entsprechend klassifiziert. Dies kann in bekannter Art und Weise bspw. manuell erfolgen. Vorteilhafterweise werden die so klassifizierten neuen Datensätze DSC(ZX) in die Datenbank 1000 übertragen.

Als Trainingsdaten wird für den weiteren, dritten Verfahrens- bzw. Trainingsschritt S3 im Schritt S31 ein weiterer Minibatch MB* basierend auf den von der Sensorik 131 neu aufgenommene Datensätzen DSC(ZX) des Produkts C im Zustand ZX, d.h. des fehlerhaften Produkts C', sowie auf den in der Datenbank 1000 bereits vorhandenen Datensätzen DSC(Z0) des Produkts C in intaktem Zustand Z0 verwendet.

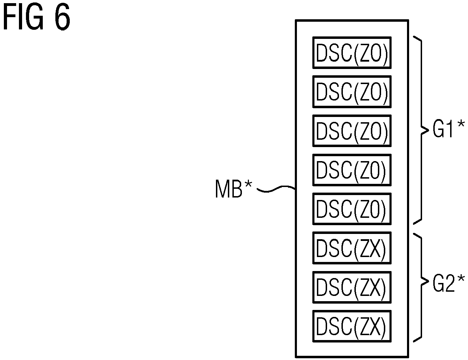

Um das KI-System 11 und dessen künstliches neuronales Netzwerk KNN mit den neuen Datensätzen DSC(ZX) im Trainingsschritt S3 weiter zu trainieren bzw. lernen zu lassen, wird der genannte weitere Minibatch MB* mit einer weiteren ersten Gruppe G1* von klassifizierten Datensätzen DSG1* insbesondere aus der vorab bereitgestellten Datenbank 1000 und einer weiteren zweiten Gruppe G2* von klassifizierten Datensätzen DSG2* aufgebaut. Dies ist in der FIG 6 exemplarisch dargestellt.

Generell soll dabei gelten, dass die weitere zweite Gruppe G2* die neuen Datensätze DSC(ZX) umfasst, d.h. DSG2*=DSC(ZX). Desweiteren sollen die Datensätze DSG1*, DSG2* der beiden weiteren Gruppen G1*, G2* zum Einen bezüglich des Produkts, dem sie zugeordnet sind, gleichartig und zum Anderen bezüglich der Zustände dieses Produkts verschiedenartig sein. D.h. die Datensätze DSG1* der weiteren ersten Gruppe G1* repräsentieren das betroffene Produkt, nach wie vor bspw. Produkt C, in einem ersten, ursprünglich bekannten Zustand Zj, und die Datensätze DSG2* der weiteren zweiten Gruppe G2* repräsentieren das gleiche betroffene Produkt C in einem zweiten, neuen Zustand ZX mit Zj#ZX. Mit der Forderung, dass gilt DSG2*=DSC(ZX), kann also für die weitere erste Gruppe G1* bspw. gelten DSG1*=DSC(Zj) mit Zj=Z0, Z1, Z2, Z3.

Konkret kann die weitere erste Gruppe G1* eine Anzahl NDSalt von klassifizierten Datensätzen DSG1* zum Produkt C in dem bereits bekannten Zustand Zj umfassen. Diese hier exemplarisch angegebenen Datensätze DSC(Z0) bzw. DSC(Z1) waren bereits in der ursprünglichen, vorab bereitgestellten Datenbank 1000 vorhanden. NDSalt ist letztlich lediglich durch die Anzahl der alten, in der Datenbank 1000 ursprünglich vorhandenen Datensätze zum betroffenen Produkt im gewünschten Zustand Zj beschränkt. Es kann bspw. gelten NDSalt=5.

Die weitere zweite Gruppe G2* wird derart erstellt, dass sie eine Anzahl NDSneu von neuen klassifizierten Datensätzen DSG2* zum fehlerhaften Produkt C' im neuen Zustand ZX umfasst, typischerweise sämtliche verfügbaren neuen Datensätze DSC(ZX) zum fehlerhaften Produkt C' im Zustand ZX.

Da nur wenige derartige neue Datensätze DSC(ZX) verfügbar sind, da dieses weitere Training frühzeitig nach Auftreten des neuen Fehlers FX ausgeführt werden muss, um sicherzustellen, dass die vom Automatisierungssystem 1 gesteuerte Produktionsanlage 100 frühestmöglich auf das Auftreten dieses neuen Fehlers FX reagieren kann, bspw. durch Entnahme des fehlerhaften Produkts C' aus dem Produktionsprozess, gilt für NDSneu typischerweise NDSneu≤10, insbesondere NDSneu≤5 und vorteilhafterweise NDSneu≤3.

Der demnach eine Anzahl NDSalt+NDSneu von Datensätzen DSC(Z0) des Produkts C in intaktem sowie Datensätze DSC(ZX) des Produkts C in fehlerhaftem Zustand ZX mit Fehler FX umfassende weitere Minibatch MB* wird nun im weiteren Trainingsschritt S3 verwendet, um die Parameter Phi des künstlichen neuronalen Netzwerkes KNN weiter zu optimieren, bspw. wiederum unter Verwendung des an sich bekannten SGD-Verfahrens.

Hierzu werden im Trainingsschritt S32 die Parameter Phi des künstlichen neuronalen Netzwerkes KNN ausgehend von den bislang geltenden Parametern Phi(Pmax) und unter Verwendung des weiteren Minibatches MB* in einer oder ggf. mehreren Iterationen optimiert, bspw. wiederum unter Verwendung des bereits genannten SGD-Verfahrens, resultierend in nun optimierten Parametern Phi(Pfin). Mit anderen Worten lernt also das künstliche neuronale Netzwerk KNN anhand der klassifizierten Datensätze DSC(Z0), DSC(ZX) des weiteren Minibatches MB* und ausgehend von Parametern Phi(Pmax), wobei in dem Trainingsschritt S3 neue das künstliche neuronale Netzwerk KNN bestimmende Parameter Phi(Pfin) erzeugt werden.

Im Unterschied zum zweiten Verfahrensschritt S2 des Pre-Trainings muss der Trainingsschritt S3 idealerweise nicht wiederholt werden bzw. läuft nur ein Mal.

Dieses Konzept baut darauf auf, dass bei einem wie oben beschrieben anhand der Minibatches MB(p) vortrainierten KS-System 11 dieses anhand von lediglich bspw. NDSneu=3 oder sogar weniger Fällen derart effizient trainierbar ist, dass ein leistungsfähiges KI-System 11 bereitgestellt werden kann, welches dann auch die im Rahmen des Pre-Training nicht bekannten Fehler FX bzw. Zustand ZX erkennt. Dies beruht darauf, dass die geschilderte geschickte Wahl von Minibatches MB(p) und das jeweilige Training des KI-Systems 11 die Wirkung eines sog. "Meta-Lernens" hat, so dass das KI-System 11 aufgrund der Vielzahl Pmax von Wiederholungen bzw. Durchläufen des zweiten Schritts bzw. des Trainingsverfahrensschritts S22(p) gelernt hat zu lernen, so dass es beim weiteren Training ausreicht, nur wenige Fälle NDSneu als Trainingsmaterial bereit zu stellen. Dieser grundsätzliche Ansatz wird bspw. im "Reptile"-Algorithmus zum Meta-Lernen angewendet.

Da die weitere Optimierung bzw. das weitere Training im Schritt S3 mit vergleichsweise wenig Aufwand und ohne besonders hohe Anforderung an zur Verfügung stehende Rechenleitung etc. ausgeführt werden kann, ist es nicht notwendig, diese Optimierung bspw. auf einem zentralen, leistungsfähigen Rechner auszuführen, sondern es ist denkbar, die Optimierung direkt auf der genannten Steuereinrichtung 100 des Automatisierungssystems 1 auszuführen. Auch für den Fall, dass das KI-System 11 auf einem sog. "edge device" implementiert ist, welches sich häufig ebenfalls durch eine eher reduzierte Rechenleistung auszeichnet, kann die Optimierung wegen der geringen Anforderungen vor Ort ausgeführt werden.

In der Praxis kann also bspw. zunächst ein KI-System 11 mit den Schritten S1, S2 und unter Verwendung der Minibatches MB(p) bestehend aus Datensätzen DSi(j) aus der vorab bereitgestellten Datenbank 1000 derart trainiert bzw. vortrainiert werden, dass das künstliche neuronale Netzwerk KNN des KI-Systems 11 von optimierten Parametern Phi(Pmax) bestimmt ist. Dieses KI-System 11 mit dem so optimierten künstlichen neuronalen Netzwerk KNN kann dann bspw. in der Steuereinheit 100 oder, wie oben angedeutet, auf einem "edge device" etc. implementiert werden, bevor dieses in Betrieb genommen wird. Genauso ist es denkbar, das vortrainierte KI-System 11 nachträglich auf einem solchen Gerät zu implementieren und in Betrieb zu nehmen. In jedem der genannten Fälle ist es dann später bei Bedarf wie beschrieben möglich, anhand weniger neuer Fallbeispiele das KI-System 11 zu optimieren.

Bei der Erzeugung der diversen Minibatches MB, MB* wurden Kriterien zur Auswahl der Datensätze der jeweiligen ersten G1, G1* und zweiten Gruppen G2, G2* genannt. Vorteilhafterweise, aber nicht notwendigerweise, gilt, dass für einen jeweiligen Minibatch MB, MB* die Datensätze sowohl der jeweiligen ersten G1, G1* als auch der jeweiligen zweiten Gruppe G2, G2* derart gewählt werden, dass sie das gleiche Produkt repräsentieren, d.h. DSi(j) und DSi(n) mit j#n. Konsequenterweise würden die Datensätze dann derart gewählt, dass sich jeweils die Zustände der Produkte der ersten Gruppe von denjenigen der zweiten Gruppe unterscheiden. Es werden hierfür also letztendlich idealerweise Datensätze DSi(j) und DSi(n) mit i=A,B oder C und j#n für die ersten bzw. zweiten Gruppen ausgewählt.

Die Erfindung wurde konkret, jedoch exemplarisch anhand eines Qualitätskontrollsystems 130 einer Produktionsanlage 100 erläutert. Generell gilt jedoch, dass die Erfindung bei jeglichen Systemen, insbesondere bei Automatisierungssystemen 1, eingesetzt werden kann, bei denen anhand von künstlicher Intelligenz bzw. anhand von künstlichen neuronalen Netzwerken Analysen o.ä. stattfinden und bei denen sich im Fall von neu auftretenden, d.h. bislang unbekannten Situationen das künstliche neuronale Netzwerk an die neue Situation anpassen muss, wobei insbesondere nur sehr wenigen Datensätze vorhanden sind mit denen das künstliche neuronale Netzwerk trainiert werden kann. Bspw. ist der beschriebene Ansatz in der Biomedizin für die Klassifikation von seltenen Zelltypen oder im Bereich personalisierter Medizin zur KI-basierten Zuordnung einzelner Patienten zu Patientengruppen einsetzbar.

### Bezugszeichen

- 1: Automatisierungssystem
- 10: Steuereinrichtung
- 11: KI-System
- 12: Datenbank
- 100: Anlage, Produktionsanlage
- 110, 120: Maschine
- 130: Qualitätskontrollsystem
- 131: Sensorik, Kamera
- 1000: Datenbank
- A, B, C: Produkt, Objekt
- A', B', C': fehlerhaftes Produkt
- F1, F2, F3, FX: Produktionsfehler
- DSA, DSB, DSC: Datensätze
- DSi(j): Datensatz
- G1, G2, G1*, G2*: Gruppen von Datensätzen
- KNN: künstliches neuronales Netzwerke
- MB(p), MB*: Minibatch
- Phi: Parameter
- REQ: Anfrage an Datenbank
- S1: Verfahrensschritt
- S2: Verfahrensschritt
- S21: Selektionsverfahrensschritt
- S22: Trainingsverfahrensschritt
- S3: Verfahrensschritt
- Z0, Z1, Z2, Z3, ZX: Zustände

## Patentansprüche

1. Computerimplementiertes Verfahren für eine Steuereinrichtung (10) eines Automatisierungssystems (1) zum Trainieren eines von Parametern Phi(0) bestimmten künstlichen neuronalen Netzwerkes KNN eines KI-Systems (11) der Steuereinrichtung (10),
wobei in einem Verfahrensschritt S2 neue Parameter Phi(Pmax) des künstlichen neuronalen Netzwerkes KNN derart ermittelt werden, dass in dem Verfahrensschritt S2 für jedes p beginnend bei p=1 und endend bei p=Pmax,
- in einem Selektionsverfahrensschritt S21(p) zur Bildung eines Minibatches MB(p) klassifizierte Datensätze aus einer vorab bereitgestellten Datenbank (1000) selektiert werden,
- in einem Trainingsverfahrensschritt S22(p) das künstliche neuronale Netzwerk KNN anhand der Minibatches MB(p) und ausgehend von Parametern Phi(p-1) derart trainiert wird, dass jeweils neue das künstliche neuronale Netzwerk KNN bestimmende Parameter Phi(p) ermittelt werden,
wobei
- die Datenbank (1000) für eine Vielzahl von Objekten i (i=A,B,C) zu jedem der Objekte i eine Vielzahl von klassifizierten und das jeweilige Objekt i im Zustand j repräsentierenden Datensätzen DSi(j) umfasst,
- im Selektionsverfahrensschritt S21(p) zur Bildung des Minibatches MB(p) eine erste Gruppe G1(p) von Datensätzen und eine zweite Gruppe G2(p) von Datensätzen mit jeweils zumindest einem Datensatz selektiert wird, wobei gilt, dass
-- die Datensätze einer jeweiligen Gruppe G1(p), G2(p) des Minibatches MB(p) bezüglich des Objekts i, das sie repräsentieren, und bezüglich des Zustands j dieses Objekts i gleichartig sind,
-- die Datensätze verschiedener Gruppen G1(p), G2(p) des Minibatches MB(p) bezüglich des Objekts i, das sie repräsentieren, und/oder bezüglich des Zustands j dieses Objekts i verschiedenartig sind.

2. Verfahren nach Anspruch 1, **dadurch gekennzeichnet, dass** die Datensätze der ersten Gruppe G1(p) und die Datensätze der zweiten Gruppe G2(p) bezüglich des jeweiligen Objekts i, das sie jeweils repräsentieren, gleichartig sind.

3. Verfahren nach einem der Ansprüche 1 bis 2, **dadurch gekennzeichnet, dass** der jeweilige Minibatch MB(p) höchstens 50 Datensätze umfasst, insbesondere höchstens 20 Datensätze und vorzugsweise höchstens 10 Datensätze.

4. Verfahren nach einem der Ansprüche 1 bis 3, **dadurch gekennzeichnet, dass** das trainierte künstliche neuronale Netzwerk KNN nach dem Verfahrensschritt S2 bedarfsweise in einem weiteren Trainingsschritt S3 ausgehend von den bis dahin ermittelten Parametern Phi(Pmax) und anhand eines weiteren Minibatches MB* weiter trainiert wird, um neue das künstliche neuronale Netzwerk KNN bestimmende Parameter Phi(Pfin) zu ermitteln, wobei der weitere Minibatch neue klassifizierte Datensätze aufweist, wobei sich ein jeweiliger neuer Datensatz DSm(n) bezüglich des Objekts m, das er repräsentiert, oder bezüglich des Zustands n des Objekts m, das er repräsentiert, von den Datensätzen DSi(j) der vorab bereitgestellten Datenbank (1000) unterscheidet.

5. Verfahren nach Anspruch 4, **dadurch gekennzeichnet, dass** der weitere Trainingsschritt S3 ausgeführt wird, wenn festgestellt wird, dass sich eines der Objekte i in einem in der vorab bereitgestellten Datenbank (1000) nicht bekannten Zustand ZX befindet, der von keinem der Datensätze DSi(j) in der vorab bereitgestellten Datenbank (1000) repräsentiert ist.

6. Verfahren nach einem der Ansprüche 4 bis 5, **dadurch gekennzeichnet, dass** dem weiteren Trainingsschritt S3 ein Klassifizieren der neuen Datensätze DSm(n) vorausgeht.

7. Verfahren nach einem der Ansprüche 4 bis 6, **dadurch gekennzeichnet, dass** der weitere Minibatch MB* eine weitere erste Gruppe G1* von klassifizierten Datensätzen insbesondere aus der vorab bereitgestellten Datenbank (1000) und eine weitere zweite Gruppe G2* von klassifizierten Datensätzen umfasst, wobei
- die weitere zweite Gruppe G2* die neuen Datensätze umfasst,
- die Datensätze der beiden weiteren Gruppen G1*, G2* bezüglich des Objekts i, das sie repräsentieren, gleichartig und bezüglich der Zustände j dieses Objekts i verschiedenartig sind.

8. Verfahren nach Anspruch 7, **dadurch gekennzeichnet, dass** die weitere zweite Gruppe G2* höchstens 10, insbesondere höchstens 5 und vorzugsweise höchstens 3 Datensätze umfasst.

9. Verfahren nach einem der Ansprüche 4 bis 8, **dadurch gekennzeichnet, dass** die neuen klassifizierten Datensätze in die Datenbank (1000) übertragen werden.

10. Vorrichtung (10) zum Betreiben eines Automatisierungssystems (1), insbesondere Steuereinrichtung, aufweisend ein KI-System (11) mit einem trainierten künstlichen neuronalen Netzwerk KNN zum Erzeugen eines Steuersignals für das Automatisierungssystem (1), wobei das künstliche neuronale Netzwerk KNN nach einem Verfahren gemäß einem der Ansprüche 1 bis 3 trainiert ist.

11. Vorrichtung (10) nach Anspruch 10, **dadurch gekennzeichnet, dass** das KI-System (11) gemäß einem der Ansprüche 4 bis 9 weiter trainiert ist.

12. Automatisierungssystem (1) mit einer als Steuereinrichtung des Automatisierungssystem (1) ausgebildeten Vorrichtung (10) nach einem der Ansprüche 10 bis 11.

13. Verfahren zum Betreiben eines Automatisierungssystems (1) nach Anspruch 12, wobei das KI-System (11) gemäß einem der Ansprüche 4 bis 9 weiter trainiert wird, wenn festgestellt wird, dass sich eines der Objekte i in einem in der vorab bereitgestellten Datenbank (1000) nicht bekannten Zustand ZX befindet, der von keinem der Datensätze DSi(j) in der vorab bereitgestellten Datenbank (1000) repräsentiert ist.
